# EUROPEAN PATENT SPECIFICATION

(11) **EP 1 610 207 B1**
(45) Date of publication and mention of the grant of the patent: **14.08.2019**
(21) Application number: 05013715.7
(22) Date of filing: 24.06.2005
(51) Int. Cl.: G06F 3/00, G06F 3/033

(54) **Haptic feedback input device**
Eingabevorrichtung mit haptischer Rückkopplung
Dispositif d'entrée à rétroaction haptique

(30) Priority: 24.06.2004 JP 2004186561
(43) Date of publication of application: 28.12.2005
(73) Proprietor: Alps Alpine Co., Ltd., Tokyo 145-8501 (JP)
(72) Inventor: Hayasaka, Satoshi, Ota-ku, Tokyo 145-8501 (JP)
(74) Representative: Schmitt-Nilson Schraud Waibel Wohlfrom Patentanwälte Partnerschaft mbB

(56) References cited:
- EP-A1- 1 345 112
- EP-A2- 1 406 152

## Description

### BACKGROUND OF THE INVENTION

### 1. Field of the Invention

The present invention relates to a haptic feedback input device used for a centralized control or the like of an electric device, and more particularly, to an operation control of an operating unit when the operating unit is operated to exceed an operating range of the electric device.

### 2. Description of the Related Art

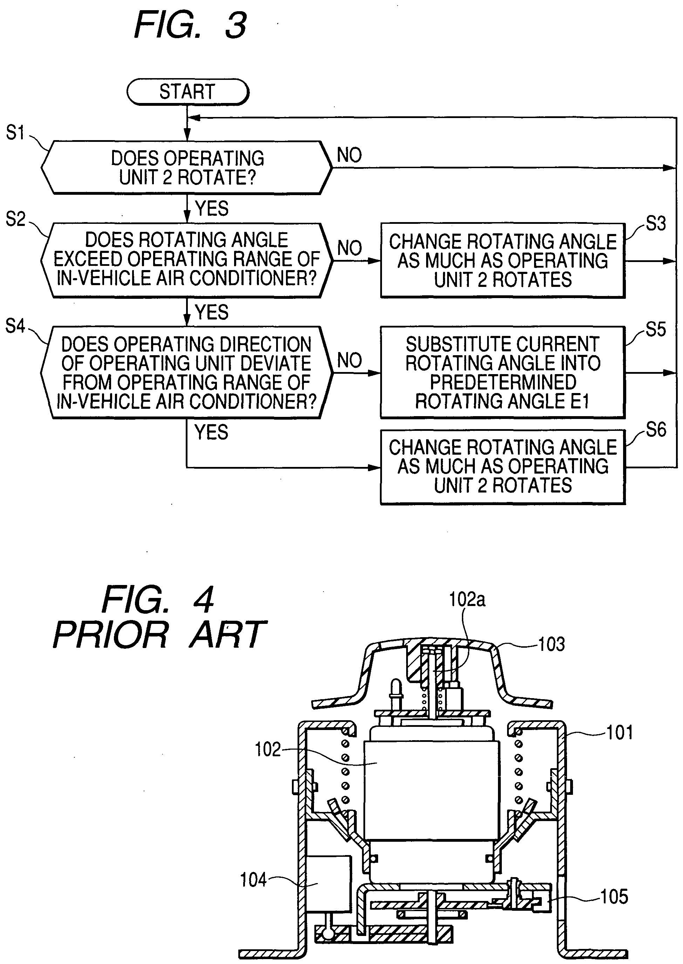

As an input device capable of controlling various in-vehicle electronic devices, such as air conditioners, radios, televisions, CD players, navigation systems and the like, the present applicant proposed a manual input device including, as shown in Fig. 4, a motor 102 pivotably attached to a frame 101; a manual operating unit 103 attached to a motor driving shaft 102a; a first angle sensor 104 that detects a pivoting direction and a pivoting distance of the motor 102; a second angle sensor 105 that detects the rotating direction and distance of the motor driving shaft 102a; and a control unit that controls the driving of the motor 102 based on angle signals outputted from the first and second angle sensors, and supplies a haptic force to the manual operating unit 103 according to the operating state of the manual operating unit 103 (for example, see JP 2002-149324 A, which corresponds to EP 1 205 956 A2).

In the above manual input device, the motor 102 is pivotably attached to the frame 101, the first sensor 104 detects the pivoting direction and distance of the motor 102, and the second sensor 105 detects the rotating direction and distance of the motor 102. Therefore, for example, an in-vehicle electronic device that is to be controlled can be selected by changing the pivoting direction of the motor 102, and the function of the selected electric device can be controlled according to the rotating distance of the motor driving shaft 102a. As a result, it is possible to select an in-vehicle electronic device desired to be controlled and to control a function of the device with a single motor and a single manual operating unit.

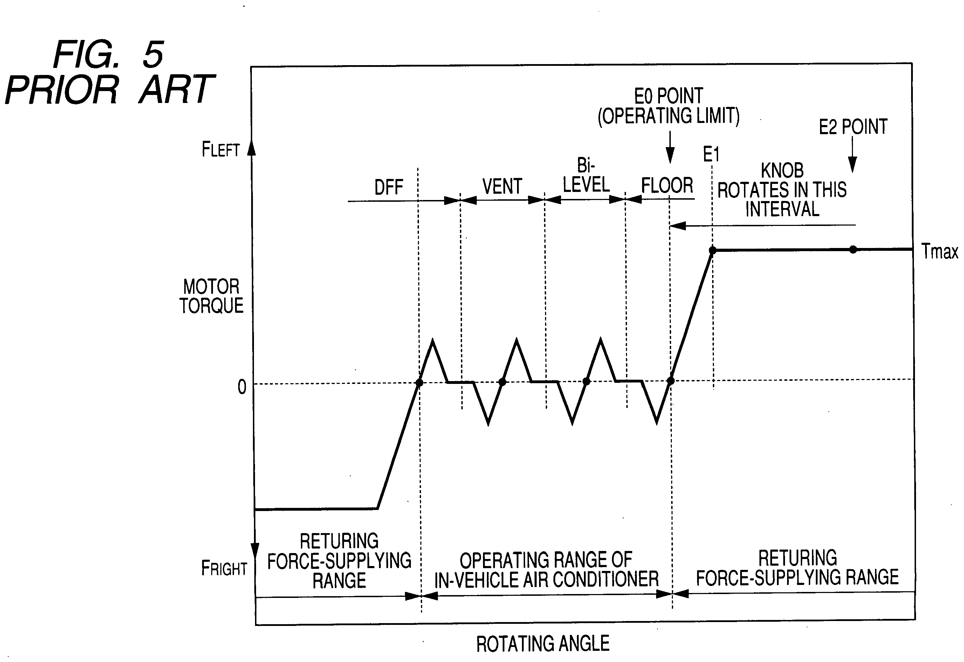

FIG. 5 shows relationships among the rotating distance of the manual operating unit 103, motor torque supplied to the manual operating unit 103, and functions of the in-vehicle electric device that are changed by rotating the manual operating unit 103 using a manual input device converting an air-ventilation opening of an in-vehicle air conditioner as an example. It is apprehended from FIG. 5 that, in the example, the air-ventilation opening of the in-vehicle air conditioner is converted into any one of defroster (DEF), ventilator (VENT), Bi-LEVEL and FLOOR by rotatably operating the manual operating unit 103, and a sense of click that is generated by changing the rotating direction of the motor 102 at a required timing, is supplied to the manual operating unit 103 whenever the air-ventilation opening of the in-vehicle air conditioner is converted.

In addition, when the operating distance of the manual operating unit 103 exceeds the operating range of the in-vehicle air conditioner, the manual operating unit 103 is supplied with a torque that exerts in the direction opposite to the operating direction. Specifically, the torque is proportional to the rotating distance of the manual operating unit 103 from the limit point E0 of the operating range of the in-vehicle air conditioner to the minimum rotating distance E1 among distances, at which the motor torque reaches the maximum value Tₘₐₓ, and the torque is constant at Tₘₐₓ when the rotating distance of the manual operating unit 103 exceeds E1.

As described above, in the manual input device in the related art, a motor torque that exerts in the direction opposite to the rotating direction of the manual operating unit 103 is supplied to the manual operating unit 103 after the rotating distance of the manual operating unit 103 exceeds the operating range of the in-vehicle air conditioner, so that a user can know the operating range of the manual operating unit 103 required to operate the in-vehicle air conditioner from touch typing by feeling resistance supplied by the motor torque.

As shown in FIG. 5, according to the above configuration, if a user stops exerting a force on the manual operating unit 103 in a state in which the manual operating unit 103 is rotatably operated to E2, the manual operating unit 103 is applied with the motor torque of Tₘₐₓ so as to rotate backward and return E0, that is, the limit point of the operating range of the in-vehicle air conditioner, automatically. However, there is a disadvantage in that the 'reverse rotation' delivers a sense of discomfort to the user.

In EP 1 345 112 A1, a force pattern is formed by particular points in which forces to be supplied to a operating knob are set for a plurality of particular positions that are set in a movement range of the knob and prescribed functions each connecting each adjoining pair of particular positions. A storing section stores the particular points. A computing section judges which region between particular positions the position of the knob belongs to, and calculates a control value to be supplied to an actuator on the basis of a prescribed function connecting particular points that correspond to the two respective particular positions forming the region thus found.

In EP 1 406 152 A2, under electric control of a motor by a CPU, before the rotation angle of a rotary knob reaches a predetermined angle, a torque in the same direction as an actual rotational direction is provided from the motor to the rotary knob, and the torque is decreased from a maximum value to zero. When the rotation angle of the rotary knob reaches a predetermined angle, a torque product is provided to the rotary knob depending upon an angular velocity of the rotary knob.
After the rotation angle of the rotary knob exceeds a predetermined rotation angle, a torque in the reverse direction to a rotational direction is provided to the rotary knob, and the torque is increased from zero to a maximum value.

### SUMMARY OF THE INVENTION

In view of the above-mentioned problems, it is an object of the present invention to provide a haptic feedback input device that can decrease the sense of discomfort arising from the reverse rotation of the manual operating unit.

The object is solved by the subject matter of the independent claim.

The predetermined rotating angle is set to a rotating angle where a returning force is supplied to the operating unit. In this case, the predetermined rotating angle can be set to a rotating angle where the same returning force as that supplied to the operating unit at the current rotating angle is supplied to the operating unit.

If the driving signal of the motor is generated by changing the current rotating angle calculated based on the detecting signal to the predetermined rotating angle when the operating unit is operated to exceed the operating range of the electric device and then is not operated further in the same direction, it is possible to reduce the range of the rotating angle, in which the returning force is supplied to the operating unit. In addition, a reverse rotating distance becomes zero when the predetermined rotating angle is set to a value corresponding to the limit point of the operating range of the electric device. Also, a reverse rotating distance remains short when the predetermined rotating angle is set, for example, to a value corresponding to the minimum rotating angle where the returning force supplied to the operating unit becomes maximum.

Further, it is possible to reduce the change in the returning force when the operation of the operating unit is stopped in a case in which the predetermined rotating angle is set to a rotating angle where the returning force is supplied to the operating unit as compared to a case in which the predetermined rotating angle is set to a rotating angle where the returning force is not supplied to the operating unit. Also, it is possible to remove the change in the returning force when the operation of the operating unit is stopped in the case that the predetermined rotating angle is set to the rotating angle where the same returning force as that supplied to the operating unit at the current rotating angle is supplied to the operating unit.

On the other hand, when the operating unit is operated to exceed the operating range of the electric device and then operated further in the same direction, the resistance of Tₘₐₓ is supplied continuously to the operating unit. As a result, a user can know that the operating unit is operated to exceed the operating range of the electric device from touch typing, and thus the same sense of operation as that of an input device in the related art can be obtained.

### BRIEF DESCRIPTION OF THE DRAWINGS

FIG. 1 is a diagram showing a structure of a haptic feedback input device according to an embodiment;
FIG. 2 is a graph showing the relationship between the rotating angle of an operating unit according to the embodiment and a motor torque supplied to the operating unit;
FIG. 3 is a flow chart showing a control flow of a control unit according to the embodiment;
FIG. 4 is a diagram showing the structure of a mechanism portion of the haptic feedback input device according to a related art; and
FIG. 5 is a graph showing the relationship between the rotating angle of an operating unit according to the related art and a motor torque supplied to the operating unit.

### DESCRIPTION OF THE PREFERRED EMBODIMENT

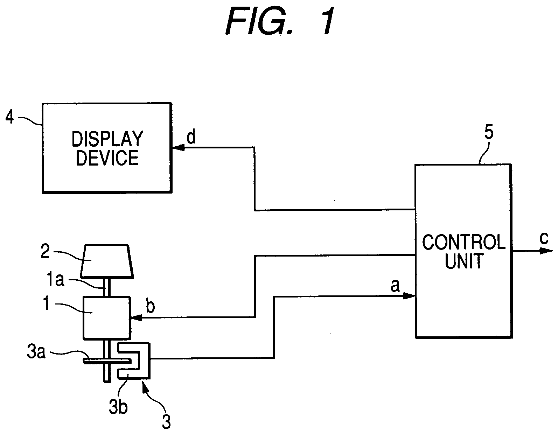

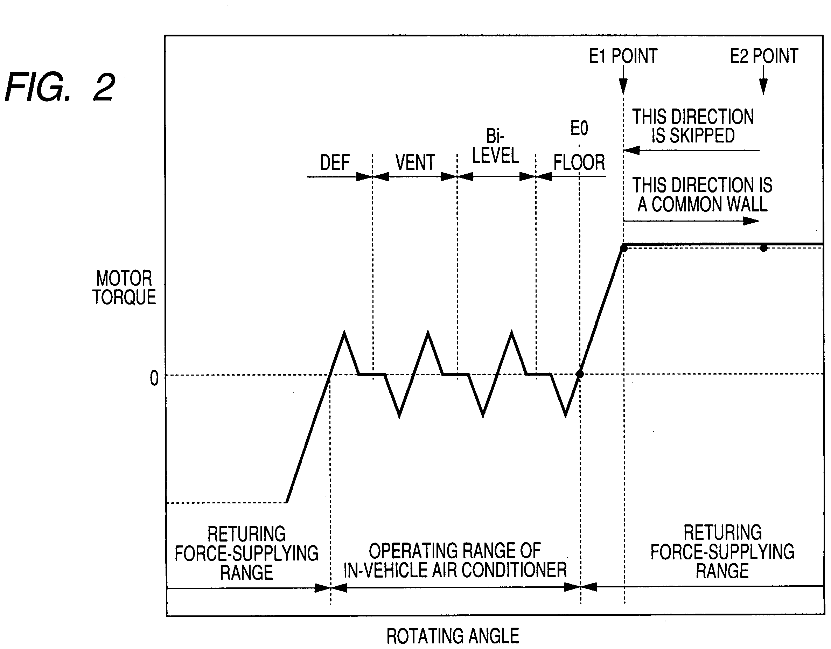

Hereinafter, an embodiment of a haptic feedback input device according to the present invention will be described with reference to FIGS. 1 to 3. FIG. 1 is a diagram showing the structure of the haptic feedback input device according to the embodiment, FIG. 2 is a graph showing the relationship between the rotating angle of an operating unit according to the embodiment and the motor torque supplied to the operating unit, and FIG. 3 is a flow chart showing the control flow of a control unit according to the embodiment.

As shown in FIG. 1, the haptic feedback input device according to the embodiment includes a motor 1, an operating unit 2 attached to a motor shaft 1a of the motor 1, an angle detecting means 3 that detects the rotating angle of the operating unit 2, a display device 4 that displays the operating state of an electric device (not shown) operated by operating the operating unit 2 rotatably, and a control unit 5 that controls the motor 1, the display device 4, and the electric device based on an angle signal a outputted from the angle detecting means 3.

Rotary motors, such as a DC motor or the like, can be used as the motor 1. The motor 1 is controlled to drive or stop by a driving signal b outputted from the control unit 5, and supplies a required haptic or returning force to the operating unit 2.

A user operates the operating unit 2 manually. The operating unit 2 is made of a synthetic resin or the like, and has a size and shape that the user can operate by his or her fingers.

A rotary encoder, a potentiometer or the like can be used as the angle detecting means 3, and a rotary encoder is used as the angle detecting means 3 in FIG. 1. The angel detecting means 3 includes a code plate 3a attached to the motor shaft 1a, a light-emitting element and a light-receiving element arranged on the front and rear surfaces, respectively, and a photo interrupter 3b.

Although any device that has been known can be used as the display device 4, a liquid crystal display device is the most preferable for an in-vehicle use in consideration of the small size, light weight and cheap price thereof.

As shown in FIG. 1, the control unit 5 reads the angle signal a outputted from the angle detecting means 3, calculates the rotating angle of the operating unit 2 based on the angle signal, and generates the driving signal b for the motor 1, an operating signal c for the electric device (in-vehicle air conditioner in FIG. 2), and a driving signal d for the display device 4 according to the rotating angle. As shown in FIG. 2, a driving signal that supplies a haptic force corresponding to a sense of click to the operating unit 2 when the operating unit 2 is operated within the operating range of the in-vehicle air conditioner and a driving signal that supplies a returning force returning the operating unit 2 to the limit point E0 of the operating range of the in-vehicle air conditioner when the operating unit 2 is operated to exceed the operating range of the in-vehicle air conditioner are generated as the driving signal b of the motor 1.

The control unit 5 stores the relationship among the angle signal a, the driving signal b and the operating signal c within the operating range of the in-vehicle air conditioner shown in FIG. 2, the relationship between the angle signal a and the driving signal b when the rotating angle of the operating unit 2 exceeds the operating range of the in-vehicle air conditioner and a reference angle signal. Meanwhile, the reference angle signal can be set to a value corresponding to the angle signal outputted from the angle detecting means 3 when the operating unit 2 is rotated by the limit point E0 of the operating range of the in-vehicle air conditioner or the angle signal outputted from the angle detecting means 3 when the operating unit 2 is operated to exceed the limit point E0 of the operating range of the in-vehicle air conditioner and then rotated by the minimum rotating angle E1 among the rotating angles where the returning force supplied to the operating unit 2 becomes the maximum.

The control unit 5 converts the rotating direction of the motor 1 from the right side to the left side, and vice versa at a predetermined angle, supplies a required sense of click to the operating unit 2, and changes the direction of the air-ventilation opening of the in-vehicle air conditioner to defroster, ventilator, Bi-LEVEL and FLOOR according to the rotating angle of the operated operating unit 2 when the operating unit 2 is operated within the operating range of the in-vehicle air conditioner.

In addition, as shown by the solid line in FIG. 2, the operating unit 2 is supplied with a motor torque that exerts in the direction opposite to the operating direction of the operating unit 2, which is proportional to the rotating distance of the operating unit 2 from the limit point E0 of the operating range of the in-vehicle air conditioner to the minimum rotating distance E1 among distances, at which the motor torque reaches the maximum value Tₘₐₓ when the operating unit 2 is operated to exceed the limit point E0 of the operating range of the in-vehicle air conditioner and then operated continuously in the same direction, and constant at Tₘₐₓ when the rotating distance of the operating unit 2 exceeds E1. Therefore, the user can know that the rotating angle of the operating unit 2 exceeds the operating range of the in-vehicle air conditioner from touch typing, and thus can stop the operation of the operating unit 2.

To the contrary, as shown by the broken line in FIG. 2, the control unit 5 generates the driving signal b for the motor 1 by changing the current rotating angle calculated based on the detecting signal of the angle detecting means 3 to the previously stored predetermined rotating angle when the operating unit 2 is operated to exceed the limit point E0 of the operating range of the in-vehicle air conditioner and then operated further as far as, for example, E2. Therefore, it is possible to reduce the range of the rotating angle, in which the returning force is supplied to the operating unit 2. The reverse rotating distance becomes zero when the predetermined rotating angle is set to a value corresponding to the limit point E0 of the operating range of the in-vehicle air conditioner. Also, a reverse rotating distance remains short when the predetermined rotating angle is set to a value corresponding to the minimum rotating angle E1 where the returning force supplied to the operating unit 2 becomes maximum.

However, it can be apprehended from FIG. 2 that the motor torque suddenly becomes zero when the operation of the operating unit 2 is stopped if the predetermined rotating angle is set to a value corresponding to the limit point E0 of the operating range of the in-vehicle air conditioner, and thus the returning force supplied to the operating unit 2 changes abruptly and a sense of discomfort is supplied to the user. To the contrary, the maximum resistance of Tₘₐₓ is supplied to the operating unit 2 if the predetermined rotating angle is set to the minimum rotating angle E1, at which the returning force supplied to the operating unit 2 becomes maximum. That is, the returning force supplied to the operating unit 2 does not change entirely when the operation of the operating unit 2 is stopped, so that the sense of discomfort is not supplied to the user. Meanwhile, the predetermined rotating angle is not limited to E0 or E1, and the predetermined rotating angle can be any angle between E0 and E1 or E1 and E2.

A sequence that calculates a rotating angle in order to generate the driving signal for the motor and the operating signal for the electric device in the control unit 5 will be described with reference to FIG. 3.

When the haptic feedback input device is driven, the control unit 5 waits for the operating unit 2 to be rotatably operated (Step S1). When the operating unit 2 is determined to be rotatably operated in Step S1, it is determined whether the rotating angle of the rotating unit 2 exceeds the operating range of the in-vehicle air conditioner (Step S2). If the rotating angle of the operating unit 2 is determined not to exceed the operating range of the in-vehicle air conditioner in Step S2, the process proceeds to Step S3, and if the rotating angle of the operating unit 2 is determined to exceed the operating range of the in-vehicle air conditioner at Step S2 where the rotating angle changes as much as the operating unit 2 rotates, the process proceeds to Step S4 and then it is determined whether the operating unit 2 continues to be operated in a direction that makes the operating unit 2 deviate from the operating range of the in-vehicle air conditioner. After that, if the operating unit 2 is determined not to be operated further in the direction that makes the operating unit 2 deviate from the operating range of the in-vehicle air conditioner at Step S4, the process proceeds to Step S5 and then the current rotating angle is changed to the predetermined rotating angle E1. On the other hand, if the operating unit 2 is judged to be operated further in the direction that makes the operating unit 2 deviate from the operating range of the in-vehicle air conditioner at Step S4, the rotating angle is changed as much as the operating unit 2 rotates.

Although the haptic feedback input device is used for a converting control of the air ventilation opening of the in-vehicle air conditioner in the embodiment, the purport of the invention is not limited thereto, and it is possible to apply the invention to a control of any function of any in-vehicle electric device.

In addition, it is possible to apply the technology described in Japanese Unexamined Patent Application Publication No. 2002-149324 to a selection of an in-vehicle electric device and a function adjustment of the selected in-vehicle electric device.

The haptic feedback input device according to the invention changes the current rotating angle calculated based on the detecting signal to a predetermined rotating angle between the limit point and an angle right below the current rotating angle so as to generate the driving signal for the motor when the operating unit is operated to exceed the operating range of the electric device and then is not operated further in the same direction. Therefore, it is possible to reduce the range of the rotating angle, in which the returning force is supplied to the operating unit, and to prevent or suppress the reverse rotation of the operating unit. As a result, the sense of discomfort arising from the reverse rotation can be reduced.

## Claims

1. A haptic feedback input device comprising:
an operating unit (2) configured to be rotatably operated;
an angle detecting means (3) configured to detect a rotating angle of the operating unit (2);
a motor (1) configured to supply a rotating force to the operating unit (2); and
a control unit (5) configured to calculate a current rotating angle value based on a detecting signal outputted from the angle detecting means (3), and to generate a driving signal for the motor (1) and an operating signal for an electric device according to the current rotating angle value,
wherein the control unit (5) is configured to drive the motor (1) in a direction that the operating unit (2) returns to a limit point (E0) of an operating range of the electric device when the operating unit (2) is operated to exceed the operating range of the electric device,
**characterized in that**, when the operating unit (2) is operated to a rotating angle (E2) that exceeds the operating range of the electric device, the control unit (5) is configured to set a value of the current rotating angle (E2) to a minimum rotating angle (E1) at which a returning force supplied to the operating unit (2) is maximized between the limit point (E0) and an angle right below the current rotating angle (E2) when the operating unit (2) is determined not to be operated further in the same direction that makes the operating unit (2) deviate from the operating range.

## Patentansprüche

1. Eingabevorrichtung mit haptischer Rückkopplung, aufweisend:
eine Betätigungseinheit (2), die zur drehbaren Betätigung ausgebildet ist;
eine Winkelerfassungseinrichtung (3), die zum Erfassen eines Drehwinkels der Betätigungseinheit (2) ausgebildet ist;
einen Motor (1), der dazu ausgebildet ist, der Betätigungseinheit (2) eine Drehkraft zuzuführen; und
eine Steuereinheit (5), die dazu ausgebildet ist, einen aktuellen Drehwinkel auf der Basis eines von der Winkelerfassungseinrichtung (3) abgegebenen Erfassungssignals zu berechnen und ein Antriebssignal für den Motor (1) sowie ein Betätigungssignal für eine elektrische Vorrichtung in Abhängigkeit von dem aktuellen Drehwinkelwert zu erzeugen,
wobei die Steuereinheit (5) dazu ausgebildet ist, den Motor (1) in einer der - artigen Richtung anzutreiben, dass die Betätigungseinheit (2) zu einem Grenzpunkt (E0) eines Betätigungsbereichs der elektrischen Vorrichtung zu - rückkehrt, wenn die Betätigungseinheit (2) unter Überschreitung des Betäti - gungsbereichs der elektrischen Vorrichtung betätigt wird,
**dadurch gekennzeichnet,**
**dass** dann, wenn die Betätigungseinheit (2) in einen Drehwinkel (E2) betä - tigt wird, der den Betätigungsbereich der elektrischen Vorrichtung überschreitet, die Steuereinheit (5) dazu ausgebildet ist, einen Wert des aktuel - len Drehwinkels (E2) auf einen Minimum-Drehwinkel (E1) zu setzen, bei dem eine der Betätigungseinheit (2) zugeführte Rückstellkraft zwischen dem Grenzpunkt (E0) und einem Winkel unmittelbar unterhalb des aktuellen Drehwinkels (E2) ihr Maximum hat, wenn die Feststellung getroffen wird, dass die Betätigungseinheit (2) nicht weiter in der gleichen Richtung betätigt wird, in der die Betätigungseinheit (2) zum Verlassen des Betätigungsbe - reichs veranlasst wird.

## Revendications

1. Dispositif d'entrée de rétroaction de type haptique comprenant :
une unité de fonctionnement (2) configurée pour une mise en service en rotation ;
un moyen de détection d'angle (3) configuré pour détecter un angle de rotation de l'unité de fonctionnement (2) ;
un moteur (1) configuré pour appliquer une force de rotation à l'unité de fonctionnement (2) ; et
une unité de commande (5) configurée pour calculer une valeur d'angle de rotation en vigueur en se basant sur un signal de détection émis par le moyen de détection d'angle (3) et pour générer un signal d'entraînement pour le moteur (1) et un signal de mise en service pour un dispositif électrique en fonction de la valeur de l'angle de rotation en vigueur ;
dans lequel l'unité de commande (5) est configurée pour entraîner le moteur (1) dans une direction telle que l'unité de fonctionnement (2) retourne à un point limite (E0) d'une plage de mise en service du dispositif électrique lorsque l'unité de fonctionnement (2) est activée pour dépasser la plage de mise en service du dispositif électrique ;
**caractérisé en ce que**, lorsque l'unité de fonctionnement (2) est activée dans la direction d'un angle de rotation (E2) qui dépasse la plage de mise en service du dispositif électrique, l'unité de commande (5) est configurée pour régler une valeur de l'angle de rotation en vigueur (E2) à un angle de rotation minimal (E1) auquel une force de rappel appliquée à l'unité de fonctionnement (2) est maximisée entre le point limite (E0) et un angle juste inférieur à l'angle de rotation en vigueur (E2) lorsqu'on détermine que l'unité de fonctionnement (2) ne doit pas être activée plus longtemps dans la même direction qui fait en sorte que l'unité de fonctionnement (2) dévie de la plage de mise en service.
